# Europäisches Patentamt

## European Patent Office

## Office européen des brevets

(11) Publication number: **0 144 962**
**B1**

(12) **EUROPEAN PATENT SPECIFICATION**

(45) Date of publication of patent specification: **29.06.88**

(51) Int. Cl.⁴: **F 16 D 23/06**

(21) Application number: **84114726.7**

(22) Date of filing: **04.12.84**

(54) Gear synchronizer assembly for power transmission.

(30) Priority: **05.12.83 JP 229587/83**
**02.11.84 JP 167303/84 u**

(43) Date of publication of application:
**19.06.85 Bulletin 85/25**

(45) Publication of the grant of the patent:
**29.06.88 Bulletin 88/26**

(84) Designated Contracting States:
**DE FR GB**

(56) References cited:
**DE-C- 933 364**
**GB-A-1 314 851**
**GB-A-1 502 346**
**JP-A-55 100 428**
**JP-A-58 163 829**
**JP-A-58 174 724**

**PATENTS ABSTRACTS OF JAPAN, vol. 7, no. 254 (M-255) 1399r, 11th November 1983; & JP - A - 58 137 627 (FUJI TEKKOSHO K.K.) 16-08-1983**

(73) Proprietor: **TOYOTA JIDOSHA KABUSHIKI KAISHA**
**1, Toyota-cho Toyota-shi**
**Aichi-ken 471 (JP)**

(72) Inventor: **Ikemoto, Kazuhito**
**c/o TOYOTA JIDOSHA K.K. 1, Toyota-cho**
**Toyato-shi Aichi-ken (JP)**
Inventor: **Terakura, Yukio**
**c/o TOYOTA JIDOSHA K.K. 1, Toyota-cho**
**Toyota-shi Aichi-ken (JP)**
Inventor: **Funato, Yasumichi**
**c/o TOYOTA JIDOSHA K.K. 1, Toyota-cho**
**Toyota-shi Aichi-ken (JP)**

(74) Representative: **Grams, Klaus Dieter, Dipl.-Ing. et al**
**Patentanwaltsbüro Tiedtke-Bühling-Kinne-Grupe-Pellmann-Grams-Struif Bavariaring 4**
**D-8000 München 2 (DE)**

Courier Press, Leamington Spa, England.

## Description

The present invention relates to a gear synchronizer assembly according to the pre-characterising portion of claim 1.

GB—A—1 314 851 discloses a gear synchronizer assembly, the thrust means of which comprises a radially contractible annular resilient member integrally formed with circumferentially spaced axial legs, which function as strut keys. The spring action for the axial legs is provided by strips, which form the annular portion of the radially contractible annular resilient member.

Such thrust means has a comparable complicated configuration and construction. Further its radially outwardly directed pressure, which helps maintaining the engagement between the internal splines of the clutch sleeve and the external splines of the spline piece in a shifted condition of the clutch sleeve, is constant and cannot be enhanced, when the clutch sleeve is shifted to set the gear member comprising the spline piece into an operational condition.

It is an object of the present invention to provide a gear synchronizer mechanism having a thrust means of a simple structure, which cooperates with the clutch sleeve in such a manner, that the durability of the clutch sleeve is enhanced and the loosening of the meshed teeth in a shifted condition of the mechanism is reliably prevented.

This object is achieved by the features of the characterizing portion of claim 1. The inventional configuration and disposition of the radially contractible annular resilient member in cooperation with the internal radial projections of the clutch sleeve ensures, that in a non-operational condition no pressure is exerted on the clutch sleeve by the resilient member, and that, if the clutch sleeve is shifted to establish and maintain meshing engagement between itself and the spline piece, a gradually increasing radially outwardly directed pressure acts upon the internal circumference of the clutch sleeve.

Advantageous modifications of the invention derive from the subclaims.

For a better understanding of the present invention, and to show how the same may be carried into effect, reference will now be made, by way of example, to the accompanying drawings, in which:—

Fig. 1 illustrates in cross-sectional form one of circumferentially equi-spaced parts of a gear synchronizer assembly according to the present invention;

Fig. 2 is a cross-sectional view taken along line II—II in Fig. 1;

Fig. 3 is a cross-sectional view taken along line III—III in Fig. 2;

Fig. 4 is a partial view taken along line IV—IV in Fig. 2, showing the relative positions of the clutch sleeve, the synchronizer ring and the spline piece illustrated in Figs. 1 to 3;

Fig. 5 illustrates in cross-sectional form one of circumferentially equi-spaced parts of another embodiment of the present invention;

Fig. 6 is a cross-sectional view taken along line VI—VI in Fig. 5;

Fig. 7 is an enlarged cross-sectional view taken along line VII—VII in Fig. 6;

Fig. 8 is an enlarged cross-sectional view taken along line VIII—VIII in Fig. 6;

Fig. 9 is an enlarged cross-sectional view taken along line IX—IX in Fig. 6; and

Fig. 10 is an enlarged partial view taken along line X—X in Fig. 6, showing the relative positions of the clutch sleeve, the synchronizer ring and the spline piece illustrated in Figs. 5 to 9.

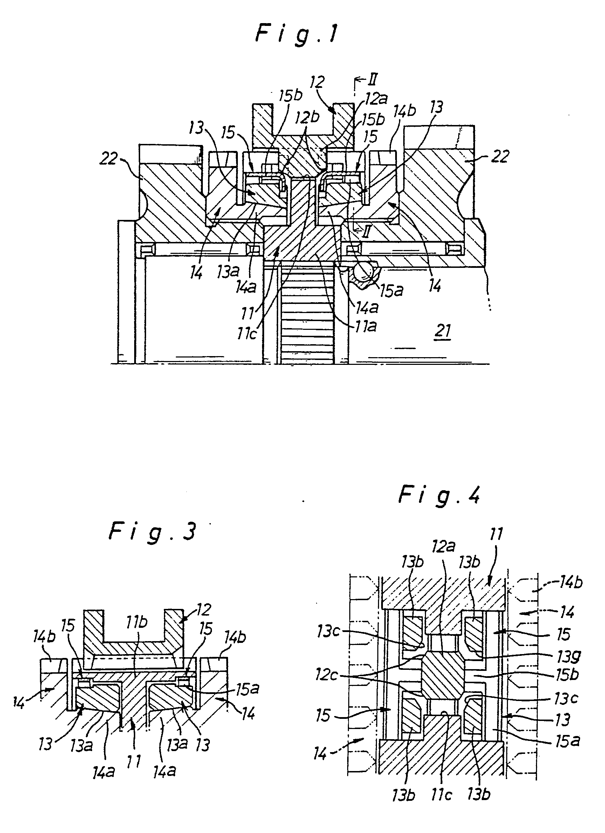

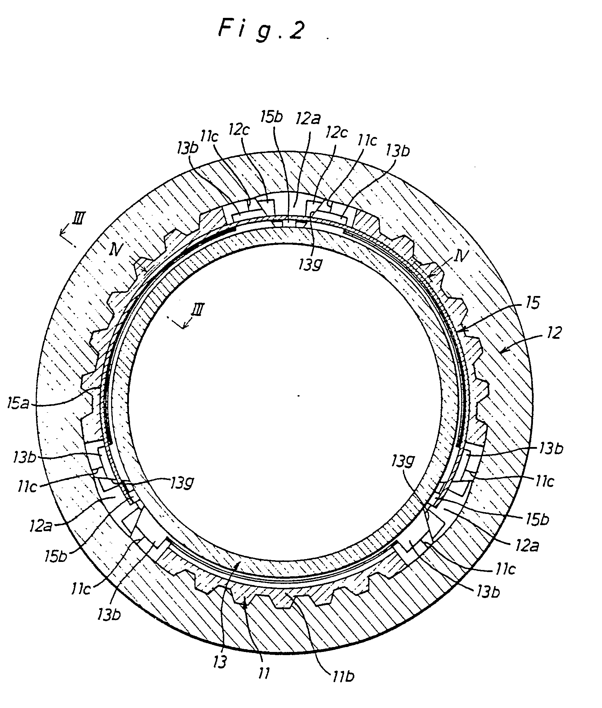

Referring now to the drawings, wherein like reference numerals represent the same or corresponding parts throughout the figures, there is illustrated, in Fig. 1, a transmission shaft 21, on which are rotatably supported a pair of change-speed gears 22 and 22. Disposed between the change-speed gears 22 and 22 is a pair of synchronizer assemblies which are operable to cause selective speed synchronization between the shaft 21 and the gears 22 and 22, respectively. As is illustrated in Figs. 1 and 2, the synchronizer assemblies have a common hub assembly which includes a hub member 11, and a pair of radially contractible annular resilient members 15, 15. The synchronizer assemblies are arranged to be operated through a clutch sleeve 12 which is connected by a yoke groove to a conventional mechanical shift mechanism (not shown). The hub member 11 is fixed at its inner hub portion 11a to the transmission shaft 21 by means of a spline connection to rotate therewith. The hub member 11 is integrally formed with an outer cylindrical hub portion 11b which is formed thereon with external splines. The clutch sleeve 12 is in surrounding relationship with the outer cylindrical hub portion 11b of hub member 11 and has internal splines in continual engagement with the external splines of hub member 11. The clutch sleeve 12 is axially shiftable to be engaged at the internal splines thereof with external splines 14b of a spline piece 14.

The left-hand synchronizer assembly is substantially the same as the right-hand synchronizer assembly such that a detailed description of the right-hand synchronizer assembly only is believed necessary. The right-hand synchronizer assembly includes the spline piece 14 and a synchronizer ring 13. The spline piece 14 is fixedly mounted on a hub portion of change-speed gear 22 by means of a spline connection to rotate therewith.

The spline piece 14 is formed at its left end with a conical portion 14a and thereon with the external splines 14b which are provided with a chamber at their left end. The synchronizer ring 13 is rotatably and axially slidably mounted on the conical portion 14a of spline piece 14 and has an internal conical surface 13a for frictional engagement with the surface of the spline piece conical portion 14a. Thus, the synchronizer ring 13 cooperates with the spline piece conical portion 14a to provide a friction clutch in a well-known manner.

In this embodiment, the outer cylindrical hub portion 11b of hub member 11 is axially recessed in its circumferentially equi-spaced three portions. As can be well seen in Fig, 2, the axially recessed portions each are formed as an axial groove 11c. The clutch sleeve 12 is formed at its inner periphery with circumferentially equi-spaced three internal radial projections 12a which are axially movable in the axial grooves 11c of hub member 11, respectively. The internal radial projections 12a of clutch sleeve 12 each are formed at their inner end corners with tapered surfaces 12b and at their slide corners with chamfers 12c. The synchronizer ring 13 is formed in its outer periphery with circumferentially equi-spaced three axial grooves 13g which are arranged to permit therethrough axial movement of the internal radial projections 12a, respectively. A pair of raised portions 13b forming the axial groove 13g are respectively formed at their inside corners with a chamfer 13c engageable with the corresponding chamfer 12c of the internal radial projection 12a.

As is illustrated in Figs. 1 and 2, the radially contractible annular resilient member 15 includes a C-letter shaped ring portion 15a which is formed at opposite ends thereof with a pair of axial legs 15b and at an intermediate portion thereof with an axial leg 15b. The ring portion 15a of resilient member 15 is formed larger in diameter than the inner circumference of outer cylindrical hub portion 11b of hub member 11 and supported in place by engagement with the inner circumference of hub portion 11b in the presence of a radial force imposed thereto. The axial legs 15b of resilient member 15 each extend from the ring portion 15a toward the internal radial projection 12a of clutch sleeve 12 through the axial groove 13g in synchronizer ring 13. The axial legs 15b of member 15 each are formed with a radial projection which is arranged between the inner end surface of synchronizer ring 13 and the tapered surface 12b of the internal radial projection 12a of clutch sleeve 12 thus forming an inner shoulder of each axial leg (see Fig. 1).

When it is desired to engage the change-speed gear 22 to the transmission shaft 21, the clutch sleeve 12 is shifted toward the spline piece 14. Then, the axial legs 15b of resilient member 15 are slightly moved by engagement with the tapered surfaces 12b of internal radial projections 12 at their inner shoulders such that each radial projection of axial legs 15b abuts against and urges the synchronizer ring 13 toward the spline piece 14 which will first effect frictional engagement of the internal conical surface 13a of synchronizer ring 13 and the surface of the spline piece conical portion 14a. Simultaneously, the axial movement of clutch sleeve 12 will be resisted by the balk action between the chamfers 12c of internal radial projections 12a and the chamfers 13c of synchronizer ring 13. When the thrust pressure acting on resilient member 15 exceeds a predetermined value, synchronism between the relatively rotating parts is established, and the internal radial projections 12a of clutch sleeve 12 ride over the axial legs 15b of resilient member 15 thereby compressing them radially inwardly. This permits the internal radial projections 12a of clutch sleeve 12 to pass through the axial grooves 13g of synchronizer ring 13 toward the spline piece 14. Thus, the internal splines of clutch sleeve 12 will be brought into engagement with the external splines 14b of spline piece 14 to accomplish the synchronization. Under such a condition, the ring portion 15a of resilient member 15 is compressed radially inwardly by engagement with the internal radial projections 12a to retain the clutch sleeve 12 in its shifted position.

In the gear synchronizer assembly described above, it is advantageous that the radially contractible annular resilient member 15 can be formed in a simple construction particularly in combination with the arrangement of the internal radial projections 12a of clutch sleeve 12 which are axially movably disposed in the axial grooves 11c of the outer cylindrical hub portion 11b. It is, therefore, able to reduce the component parts so as to enhance productivity of the gear synchronizer assembly at a low cost.

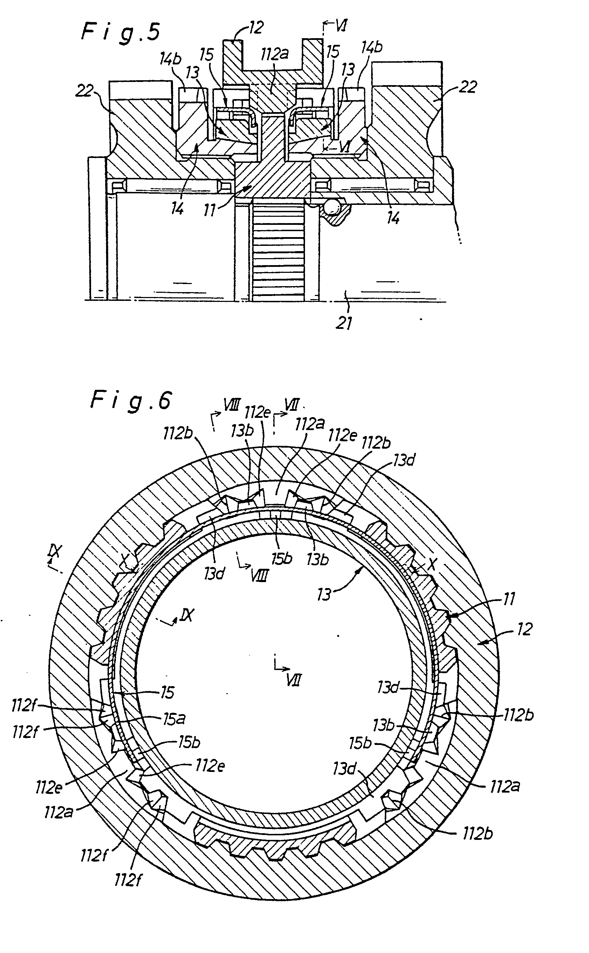

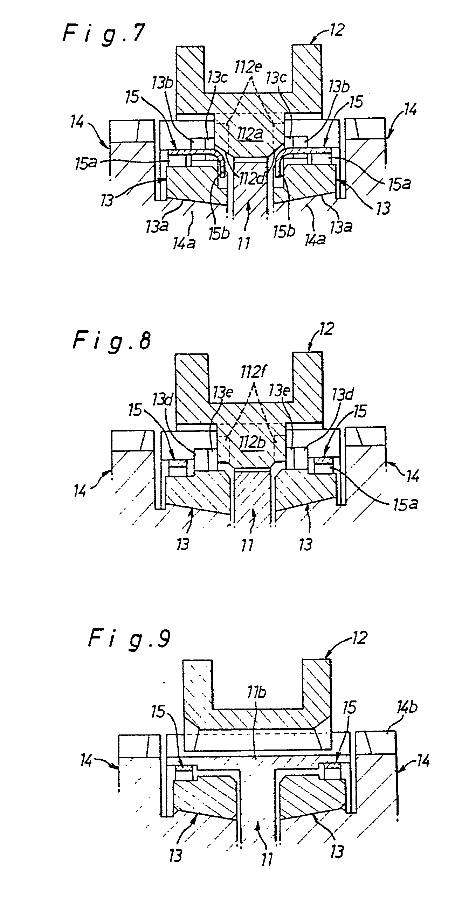

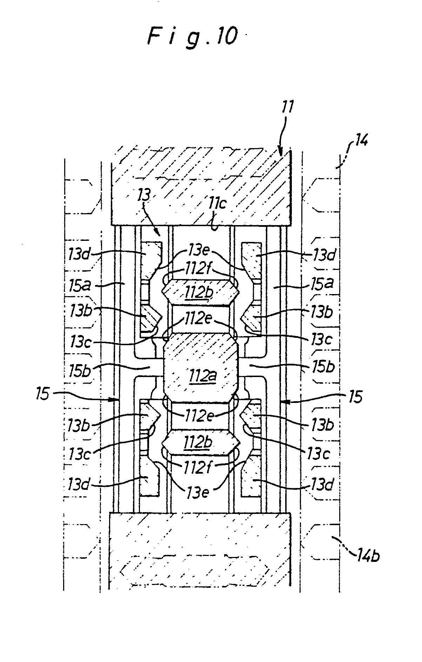

In Figs. 5 to 10, there is illustrated another preferred embodiment of the present invention, wherein the clutch sleeve 12 and the synchronizer ring 13 are improved in construction to enhance the durability thereof and to prevent loosening of the meshed teeth during deceleration of the vehicle. In this embodiment, the clutch sleeve 12 is formed at its inner periphery with circumferentially equi-spaced three internal radial projections 112a of large width which are axially movably disposed in the axial grooves 11c of hub member 11, respectively. The clutch sleeve 12 is further formed at its inner periphery with a pair of internal radial projections 112b of small width which are located at opposite sides of the respective large radial projections 112a.

As is illustrated in Figs. 6, 7 and 10, the large radial projections 112a each are formed at their inner end corners with tapered surfaces 112d and at their side corners with chamfers 112e. The large radial projections 112a are respectively arranged between a pair of raised portions 13b which are integrally formed on the synchronizer ring 13 and circumferentially equi-spaced. The raised portions 13b each are formed at their inner ends with a pair of chamfers 13c which are engageable with the chamfers 112e of large radial projections 112a, respectively. As is illustrated in Figs. 6, 8 and 10, the small radial projections 112b each are formed at their opposite ends with chamfers 112f. The small radial projections 112b are respectively arranged between the raised portion 13b and another raised portion 13d formed on the synchronizer ring 13 adjacent the respective raised portions 13b. The raised portions 13d each are formed at their inner ends with a chamfer 13e which is engageable with the chamfer 112f of small radial projection 112b. In this arrangement, the axial legs 15b of resilient member 15 are arranged to be engaged with the tapered surfaces 112d of large radial projections 112a of clutch sleeve 12 at their inner shoulders and to be engaged with the synchronizer ring 13 at their radial projections. The other construction and component parts are substantially the same as those in the embodiment shown in Figs. 1 to 4.

In shifting operation of the clutch sleeve 12 toward the spline piece 14, the axial legs 15b of resilient member 15 are slightly moved by engagement with the tapered surfaces 112d of large radial projections 112a at their inner shoulders such that each radial projection of axial legs 15b abuts against and urges the synchronizer ring 13 toward the spline piece 14 which will effect frictional engagement of the internal conical surface 13a of synchronizer ring 13 and the surface of the spline piece conical portion 14a. Simultaneously, the axial movement of clutch sleeve 12 will be resisted by the balk action or engagement between the chamfers 112e, 112f of large and small radial projections 112a, 112b and the chamfers 13c, 13e of raised portions 13b and 13d. When the thrust pressure acting on resilient member 15 exceeds a predetermined value, synchronism between the relatively rotating parts is established, and the large radial projections 112a of clutch sleeve 12 ride over the axial legs 15b of resilient member 15 thereby compressing them radially inwardly. This permits the radial projections 112a, 112b of clutch sleeve 12 to pass through axial grooves respectively formed between the raised portions 13b and 13d of synchronizer ring 13. Thus, the internal splines of clutch sleeve 12 will be brought into engagement with the external splines 14b of spline piece 14 to accomplish the synchronization.

From the above description, it will be understood that the embodiment shown in Figs. 5 to 10 is characterised by provision of the clutch sleeve 12 which is integrally formed at its inner periphery with the circumferentially equi-spaced large and small radial projections 112a and 112b to be engaged at their chamfered ends 112e, 112f with the chamfers 13c, 13e of raised portions 13b and 13d on synchronizer ring 13. With this arrangement, it is advantageous that even if the number of the large radial projections 112a is reduced to form a sufficient number of internal splines on the clutch sleeve 12 for reliable power transmission, the small radial projections 112b can be formed to increase the number of engaged portions between the clutch sleeve 12 and the synchronizer ring 13 thereby to decrease the face pressure acting on the respective chamfers 112e, 112f of radial projections 112a and 112b. This serves to enhance the durability of clutch sleeve 12.

## Claims:

1. Gear synchronizer assembly comprising a gear member (22) rotatable on a transmission shaft (21), a spline (14) piece formed at one side thereof with a conical portion (14a) and thereon with external splines (14b) and mounted on said gear member for rotation therewith, a synchronizer ring (13) mounted on the conical portion (14a) of said spline piece and cooperable with the same for frictional engagement therewith, a hub member (11) fixed to said shaft (21) for rotation therewith and having a cylindrical hub portion (11b) encircling said synchronizer ring and formed thereon with external splines, a clutch sleeve (12) encircling the cylindrical hub portion of said hub member and having internal splines in continual engagement with the external splines of said hub member, said clutch sleeve being axially shiftable to be engaged at the internal splines thereof with the external splines of said spline piece, and thrust means for moving said synchronizer ring toward said spline piece in shifting operation of said clutch sleeve to effect the frictional engagement of said synchronizer ring with said spline piece, said thrust means comprising a radially contractible annular resilient member (15) having an axial leg (15b) arranged to abut against and urge said synchronizer ring toward said spline piece, characterised in that said clutch sleeve (12) is formed at its inner periphery with an internal radial projection (12a), that said radially contractible annular resilient member (15) is supported in place by engagement with the inner circumference of the cylindrical hub portion (11b) of said hub member (11), said axial leg (15b) extending from said radially contractible annular resilient member (15) toward the internal radial projection of said clutch sleeve and having a radial projection arranged to be brought into engagement with the internal radial projection of said clutch sleeve in shifting operation of said clutch sleeve toward said spline piece (14) thus transmitting the shifting force to said synchronizer ring upon engagement with the internal projection of said clutch sleeve, the axial leg of said resilient member being arranged to be compressed radially inwardly by engagement with the internal radial projection of said clutch sleeve.

2. A gear synchronizer assembly according to Claim 1, characterised in that the internal radial projection (12a) of said clutch sleeve (12) is formed at its inner end with a tapered surface (12b) engageable with an inner shoulder of the axial leg (15b) of said annular resilient member (15).

3. A gear synchronizer assembly according to Claim 1, characterised in that said synchronizer ring (13) is integrally formed thereon with a pair of raised portions (13b) which are provided with a chamfer (13c) at each end thereof, and that the internal radial projection (12a) of said clutch sleeve (12) is arranged to pass through an axial groove (13g) between the raised portions of said synchronizer ring, the internal radial projection (12a) of said clutch sleeve being formed at one side thereof with a pair of chamfers (12c) to be engaged with the chamfers (13c) of said raised portions on said synchronizer ring.

4. A gear synchronizer assembly according to Claim 1, characterised in that said clutch sleeve (12) is formed at its inner periphery with circumferentially equi-spaced three internal radial projections (12a) axially movable in the corresponding axial grooves (11c) formed in the cylindrical hub portion (11b) of said hub member (11), and wherein said radially contractible annular resilient member (15) is a C-letter shaped resilient member which is formed at opposite ends thereof with a pair of circumferentially spaced axial legs (15b) and at an intermediate portion thereof with an axial leg (15b), said axial legs each extending from said resilient member toward the respective internal radial projections (12a) of said clutch sleeve and having a radial projection arranged to be brought into engagement with the internal radial projections of said clutch sleeve, respectively.

5. A gear synchronizer assembly according to Claim 1, characterised in that said clutch sleeve (12) is formed at its inner periphery with circumferentially spaced first and second internal radial projections (112a, 112b) which are respectively formed at each side thereof with a chamfer, the first internal radial projection (112a) being larger in width than the second internal radial projection (112b) and being arranged to be engaged with the axial leg (15b) of said resilient member (15b), and wherein said synchronizer ring (13) is formed thereon with circumferentially spaced first and second raised portions (13b, 13d) which are chamfered at one end thereof to be engaged with the chamfers of the first and second internal radial projections (112a, 112b).

**Patentansprüche**

1. Zahnradsynchroeinheit mit einem Getriebeteil (22), das auf einer Übertragungswelle (21) drehbar ist, einem Keilnutglied (14), auf dem äußere Keilnuten (14b) ausgebildet sind, das an einer Seite mit einem konischen Abschnitt (14a) ausgestaltet ist und das zur gemeinsamen Drehung an das Getriebeteil angebaut ist, einem Synchronisierring (13), der auf dem konischen Abschnitt (14a) des Teilnutglieds angeordnet ist und mit diesem konischen Abschnitt zur Herstellung einer Reibungsverbindung zusammenwirkt, einem Nabenteil (11), das drehfest mit der Übertragungswelle (21) verbunden ist und einen zylindrischen Nabenabschnitt (11b) aufweist, der den Synchronisierring umgibt und auf de äußere Keilnuten ausgebildet sind, einer Schiebemuffe (12), die den zylindrischen Nabenabschnitt des Nabenteils umgibt und innere Keilnuten aufweist, die in kontinuierlichem Eingriff mit den äußeren Keilnuten des Nabenteils sind, wobei die Schiebemuffe axial verschiebbar ist, so daß sie mit ihren inneren Keilnuten mit den äußeren Keilnuten des Keilnutglieds in Eingriff bringbar ist, und einem Andruckteil zur Bewegung des Synchronisierrings in Richtung auf das Keilnutglied beim Schaltvorgang der Schiebemuffe, um die Reibungsverbindung zwischen dem Synchronisierring und dem Keilnutglied zu bewirken, wobei das Andruckteil ein in Radialrichtung zusammendrückbares ringförmiges elastisches Teil (15) aufweist, das einem Axialfortsatz (15b) hat, der derart angeordnet ist, daß er gegen den Synchronisierring anschlägt und diesen in Richtung auf das Keilnutglied drückt, dadurch gekennzeichnet, daß die Schiebemuffe (12) auf ihrem Innenumfang mit einem inneren Radialvorsprung (12a) ausgebildet ist, daß das in Radialrichtung zusammendrückbare ringförmige elastische Teil (15) durch Eingriff mit dem Innenumfang des zylindrischen Nabenabschnitts (11b) des Nabenteils (11) ortsfest gehalten ist, wobei der Axialfortsatz (15b) sich von dem in Radialrichtung zusammendrückbaren ringförmigen elastischen Teil (15) in Richtung auf den inneren Radialvorsprung der Schiebemuffe erstreckt und einen Radialvorsprung aufweist, der derart angeordnet ist, daß er in Eingriff mit dem inneren Radialvorsprung der Schiebemuffe beim Schaltvorgang der Schiebemuffe in Richtung auf das Keilnutglied (14) in Eingriff bringbar ist, so daß die Schaltkraft auf den Synchronisierring übertragen wird, wenn der Radialvorsprung mit dem inneren Radialvorsprung der Schiebemuffe in Eingriff gerät, wobei der Axialortsatz des elastischen Elements derart angeordnet ist, daß er bei Eingriff mit dem inneren Radialvorsprung der Schaltmuffe radial einwärts zusammengedrückt wird.

2. Zahnradsynchroeinheit nach Anspruch 1, dadurch gekennzeichnet, daß der innere Radialvorsprung (12a) der Schiebemuffe (12) an seinem inneren Ende mit einer abgeschrägten Fläche (12b) ausgebildet ist, die mit einer Innenschulter des Axialfortsatzes (15b) des ringförmigen elastischen Teils (15) in Eingriff bringbar ist.

3. Zahnradsynchroeinheit nach Anspruch 1, dadurch gekennzeichnet, daß auf dem Synchronisierring (13) einstückig ein Paar vorstehende Abschnitte (13b) ausgebildet sind, die mit einer Abschrägung (13c) an jedem ihrer Enden ausgebildet sind, und daß der innere Radialvorsprung (12a) der Schiebemuffe (12) derart angeordnet ist, daß er durch eine axiale Nut (13g) zwischen den vorstehenden Abschnitten des Synchronisierrings verläuft, wobei der innere Radialvorsprung (12a) der Schiebemuffe an einer seiner Seiten mit einem Paar Abschrägungen (12c) ausgebildet ist, die mit den Abschrägungen (13c) der vorstehenden Abschnitte auf dem Synchronisierring in Eingriff bringbar sind.

4. Zahnradsynchroeinheit nach Anspruch 1, dadurch gekennzeichnet, daß die Schiebemuffe (12) auf ihrem Innenumfang mit in Umfangsrichtung gleich beabstandeten drei inneren Radialvorsprüngen (12a) ausgebildet ist, die in Axialrichtung in dem entsprechenden axialen Nuten (11c), die in den zylindrischen Nabenabschnitt (11b) des Nabenteils (11) ausgebildet sind, bewegbar sind, wobei das in Radialrichtung zusammendrückbare ringförmige elastische Teil (15) C-Form hat und an seinen entgegengesetzten Enden mit einem Paar in Umfangsrichtung beabstandeter Axialfortsätze (15b) und an einem Zwischenabschnitt mit einem Axialfortsatz (15b) ausgestaltet ist, wobei die Axialfortsätze sich jeweils von dem elastichen Teil in Richtung auf den entsprechenden inneren Radialvorsprung (12a) der Schiebemuffe erstrecken und einen Radialvorsprung aufweisen, der derart angeordnet ist, daß er in Eingriff mit dem entsprechenden inneren Radialvorsprung der Schiebemuffe bringbar ist.

5. Zahnradsynchroeinheit nach Anspruch 1, dadurch gekennzeichnet, daß die Schiebemuffe (12) auf ihrem Innenumfang in Umfangsrichtung beabstandet mit einem ersten und einem zweiten inneren Radialvorsprung (112a, 112b) ausgestaltet ist, die auf jeder ihre Seiten mit einer Abschrägung versehen sind, wobei der erste innere Radialvorsprung (112a) in seiner Breite größer ist als der zweite innere Radialvorsprung und derart angeordnet ist, daß er mit dem Axialortsatz (15b) des elastischen Teils (15) in Eingriff bringbar ist, wobei auf dem Synchronisierring (13) in Umfangsrichtung beabstandet ein erster und ein zweiter vorstehender Abschnitt (13b, 13d) ausgebildet sind, die an einem ihrer Enden abgeschrägt sind, so daß sie mit den Abschrägungen des ersten und des zweiten inneren Radialvorsprungs (112a, 112b) in Eingriff bringbar sind.

**Revendications**

1. Un dispositif de synchronisation de roue dentée comprenant un organe (22), formant roue dentée susceptible de tourner sur un arbre de transmission (21), une pièce cannelée (14) comportant une partie conique (14a) sur l'un de ses côtés et des cannelures externes (14b) sur le dessus et qui est montée sur ledit organe formant roue dentée pour tourner avec·lui, une bague de synchronisation (13) montée sur la partie conique (14a) de ladite pièce cannelée et susceptible de coopérer avec cette dernière en se mettant en prise avec elle par friction, un organe formant moyeu (11) fixé audit arbre (21) en vue de tourner avec celui-ci et comportant une partie cylindrique (11b) de moyeu entourant ladite bague de synchronisation et muni de cannelures externes, un manchon d'embrayage (12) entourant la partie cylindrique de moyeu dudit organe formant moyeu et comportant des cannelures internes en prise constante avec les cannelures externes dudit organe formant moyeu, ledit manchon d'embrayage pouvant être déplacé axialement afin de se mettre en prise par ses cannelures internes avec les cannelures externes de ladite pièce cannelée et des moyens de poussée destinés à déplacer ladite bague de synchronisation vers ladite pièce cannelée au cours de l'opération de déplacement dudit manchon d'embrayage pour réaliser la mise en prise par friction de ladite bague de synchronisation avec ladite pièce cannelée, lesdits moyens de poussée comprenant un organe (15), élastique, annulaire, susceptible de se contracter radialement et comportant un jambage axial (15b) disposé de façon à venir en butée contre ladite bague de synchronisation at à la repousser contre ladite pièce cannelée, caractérisé en ce que ledit manchon d'assemblage (12) comprend à sa périphérie une partie (12a) en saillie radiale interne, en ce que ledit organe (15), élastique, annulaire et susceptible de se contracter radialement est maintenu en place par mise en prise avec la circonférence interne de la partie cylindrique (11b) de moyen dudit organe formant moyeu (11), ledit jambage axial (15b) s'étendant à partir dudit organe (15), élastique, annulaire et susceptible de se contracter radialement, en direction de la partie en saillie radiale interne dudit manchon d'embrayage, et comportant une partie en saillie radiale disposée en vue d'être mise en prise avec la partie in saillie radiale interne dudit manchon d'embrayage au cours de l'opération de déplacement dudit manchon d'embrayage vers ladite pièce cannelée (14), en transmettant ainsi la force de déplacement à ladite bague de synchronisation lors de la mise en prise avec la partie en saillie interne dudit manchon d'embrayage, le jambage axial dudit organe élastique étant disposé pour être comprimé radialement vers l'intérieur en venant en contact avec la partie en saillie radiale interne dudit manchon d'embrayage.

2. Un dispositif de synchronisation de roue dentée selon la revendication 1, caractérisé en ce que la partie en saillie radiale interne (12a) dudit manchon d'embrayage (12) comporte à son extrémité interne une surface conique (12b), susceptible de venir en contact avec un épaulement interne du jambage axial (15b) dudit organe élastique annulaire (15).

3. Un dispositif de synchronisation de roue dentée selon la revendication 1, caractérisé en ce que ladite bague de synchronisation (13) comporte de façon monobloc une paire de parties relevées (13b) qui sont munies d'un chanfrein (13c) à chacune de leurs extrémités, et un ce que les parties en saillie radiales internes (12a) dudit manchon d'embrayage (12) sont disposées de façon à passer dans une gorge axiale (13g) située entre les parties relevées de ladit bague de synchronisation, la partie en saillie radiale interne (12a) dudit manchon d'embrayage (12) comprenant à une de ses extrémités deux chanfreins (12c) destinés à se venir en contact avec les chanfreins (13c) desdites parties relevées de ladite bague de synchronisation.

4. Un dispositif de synchronisation de roue dentée selon la revendication 1, caractérisé en ce que ledit manchon d'embrayage (12) comprend à sa périphérie interne trois parties en saillie (12a), radiales, internes, placées à équidistance circonférentiellement, et axialement mobiles dans les gorges axiales correspondantes (11c) formées dans la partie cylindrique formant moyeu (11b) dudit organe formant moyeu (11) et dans lequel ledit organe (15), élastique, annulaire et susceptible de se contracter radialement, est un organe élastique (15) en forme de lettre C qui comporte à ses·extrémités opposées une paire de jambages (15b) axiaux espacés circonférentiellement, et dans une partie intermédiaire, un jambage axial (15b), lesdits jambages axiaux s'étendant chacun à partir dudit organe élastique vers les parties en saillies (12a) radiales internes respectives dudit manchon d'embrayage et comportant une partie en saillie radiale disposée pour être mise en contact respectivement, avec les parties en saillie radiale internes dudit manchon d'embrayage.

5. Un dispositif de synchronisation de roue dentée selon la revendication 1, caractérisé en ce que ledit manchon d'embrayage (12) comporte à sa périphérie interne une première et une seconde parties en saillie radiales internes (112a, 112b) espacées circonférentiellement qui comportent respectivement un chanfrein sur chacun de leurs côtés, la première partie en saillie radiale interne (112a) étant plus grande en largeur que la seconde partie en saillie radiale interne (112b) et étant disposée pour venir en contact avec le jambage axial (15b) dudit organe élastique (15b), et dans lequel ladite bague de synchronisation (13) est formée avec une première et une seconde parties relevées (13b, 13d), espacées circonférentiellement, qui sont chanfreinées à une de leurs extrémités pour venir en contact avec les chanfreins des premières et secondes parties en saillie radiales internes (112a, 112b).

## Fig.1

## Fig.3

## Fig.4

# F i g . 2

Fig.5

Fig.6

*F i g . 7*

*F i g . 8*

*F i g . 9*

# F i g . 10